# EUROPÄISCHE PATENTSCHRIFT

(11) **EP 3 324 041 B1**
(45) Veröffentlichungstag und Bekanntmachung des Hinweises auf die Patenterteilung: **11.12.2019**
(21) Anmeldenummer: 17196045.3
(22) Anmeldetag: 12.10.2017
(51) Int. Cl.: F03D 1/06, F03D 80/00

(54) **ROTORBLATTVERSTELLUNG**
ROTOR BLADE ADJUSTMENT
PALE DE ROTOR

(30) Priorität: 18.11.2016 DE 102016222737
(43) Veröffentlichungstag der Anmeldung: 23.05.2018
(73) Patentinhaber: ContiTech Antriebssysteme GmbH, 30165 Hannover (DE)
(72) Erfinder: Göser, Hubert, 29451 Dannenberg (DE); Kucharczyk, Andre, 29499 Gülden (DE)
(74) Vertreter: Kilsch, Armin Ralph

(56) Entgegenhaltungen:
- DE-A1-102013 206 878
- US-A1- 2006 099 075

## Beschreibung

Die Erfindung betrifft eine Einrichtung zur Rotorblattverstellung an einer Windkraftanlage, bei der die Verstellung eines drehbar gelagerten Rotorblattes über einen Zugriementrieb erfolgt, bei dem ein Zugriemen den Fuß bzw. Schaft des Rotorblattes mindestens teilweise so umschlingt, dass ein zur Verstellung des Rotorblattes erforderliches Drehmoment auf den Schaft übertragbar ist.

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden (Fahnenstellung) und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Stirnradgetrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zugmittelantrieb.

Abhängig von den einzelnen Systemen ist eine Blattverstellung um bis zu 180 Grad um die senkrecht zur Drehachse gelegene Rotorlängsachse möglich, wodurch die Rotorblätter in einem Bereich verschwenkt werden können, der von ihrer Maximalleistung bis zur "Fahnenstellung" oder Bremsung reicht.

Die heute zur Verstellung noch dominierenden Stirnradlösungen erfordern einen relativ hohen Wartungsaufwand, da u.a. der Schmierfilm im Zahneingriff erhalten werden muss, d.h. dass in regelmäßigen Abständen nachgefettet werden muss.

Diesen Nachteil vermeidet eine Verstelleinrichtung der Rotorblätter über einen als Zahnriementrieb ausgebildeten Zugmittelantrieb. Bei einer solchen Verstelleinrichtung läuft ein Zahnriemen kämmend über eine mit einem Antriebsmotor verbundene Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden.

Die DE 42 21 783 A1 offenbart eine Vorrichtung zur Verstellung von Rotorblättern, bei dem ein zusätzliches zur aerodynamischen Abbremsung des Rotors wirkendes Bremssystem vorgesehen ist, welches bei Ausfall oder Störung des Blattverstellmechanismus eine zusätzliche Bremsvorrichtung bereitstellt. Dies wird erreicht durch ein an der Nabe befestigtes Verteilergetriebe, das eine Zentralrad enthält, das mit einer Bremsscheibe verbunden ist. Das Zentralrad kann mittels einer nicht mit der Rotornabe drehenden Bremszange festgebremst werden, so dass die Rotorblätter im Störfall sicher in die Fahnenstellung geschwenkt werden. Unter anderem ist hierzu auch eine getriebeausgangsseitige Verstellung der Rotorblätter mit einem Zugmitteltrieb/Zahnriementrieb offenbart.

Die DE 10 2008 013 926 A1 offenbart eine Vorrichtung zur Verstellung des Anstellwinkel eines Rotorblattes einer Windenergieanlage mit einem als Zahnriemen oder auch als Kette ausgebildeten so genannten Hülltriebstrang. In der Ausbildung als Zahnriemen umgreift der Hülltriebstrang ein mit einer Außenverzahnung versehenes Antriebsrad und einen mit einer Außenverzahnung versehenen Drehlagerring am nabenseitigen Ende des Rotorblattes.

Da die Leistung von Windkraftanlagen immer höher wird, kommen die an sich sehr gut für diese Aufgaben geeigneten Verstelleinrichtungen mit Zahnriemen langsam an ihre Grenzen. Sowohl die hohe Zahnbelastung/Zahnfußbelastung als auch die Zugbelastung, die durch die erforderliche Vorspannung noch verstärkt wird, sind nur noch mit überdimensionalen Breiten der Zahnriemen zu realisieren. Auch die durch die üblichen rückenseitig anliegenden Spannrollen entstehende Gegenbiegung in den Zahnriemen erhöht deren Belastung.

Auch wenn, wie z.B. in der DE 10 2008 013 926 A1 ebenfalls offenbart, zur Übertragung großer Kräfte der Hülltriebstrang auch aus mehreren zueinander parallelen Riemen bestehen kann oder Verstärkungsmaterialien aus Carbon vorgesehen sind, ist eine allein Materialverstärkung oder Vervielfältigung enthaltende Lösung nicht immer zufriedenstellend.

Die DE 10 2013 206 878 A1 offenbart eine Vorrichtung zur Verstellung eines Rotorblattes einer Windturbine, wobei die Vorrichtung innerhalb der Nabe angeordnet ist. Die Verstellung erfolgt auch dort über einen Riementrieb. Eine der dort offenbarten Ausführungsformen zeigt zwei Riemen, die jeweils mit einem ihrer Enden an einem mit dem Schaft des Rotorblatts verbundenen Antriebsflansch befestigt sind und deren anderes Ende durch einen Antrieb aufgewickelt wird. Bei hohen zu übertragenden Kräfte ist jedoch die Anbindung bzw. die Befestigung am Antriebsflansch bzw. am Schaft des Rotorblattes nicht ganz unproblematisch. Auch ist dort eine Lösung offenbart, bei der mehrere, d.h. mindestens zwei Riemen über einen Flaschenzug geführt werden und an feststehenden Teilen der Nabe mit ihren Enden befestigt sind. Dadurch ergibt sich jedoch eine recht komplizierte Bauform. Im Übrigen sind bei einer innerhalb der Nabe angeordneten Verstellung eines Rotorblattes die sich ergebenden Hebelverhältnisse ungünstiger, wodurch die aufzuwendenden Kräfte bzw. die Zugkräfte auf Riementriebe sehr hoch werden können.

Für die Erfindung bestand also die Aufgabe, ein System bzw. eine Einrichtung zur Rotorblattverstellung an Windkraftanlagen bereitzustellen, die innerhalb des zur Verfügung stehenden Bauraums große Stellkräfte mit Zugmitteltrieben übertragen bzw. auch bei großen Stellkräfte die Zugkräfte innerhalb der Zugmittelantriebe reduzieren kann, so dass eine hohe Lebensdauer der Riemen erreicht wird.

Gelöst wird diese Aufgabe durch die Merkmale des Hauptanspruchs. Weitere vorteilhafte Ausbildungen sind in den Unteransprüchen offenbart.

Dabei wirken die offenbarten Merkmale in besonderer Form synergistisch zusammen. Zunächst ist der Zugriemen an seinen beiden Enden mit je einer mit einem Antriebsmotor versehenen Antriebswelle oder -scheibe verbunden und auf letzteren wechselseitig und abwechselnd aufwickelbar. Der Zugriemen bildet einen zwischen den Antriebswellen oder -scheiben befindlichen, nicht aufgewickelten durchgängigen Trum aus, der den Fuß bzw. Schaft des Rotorblattes über einen Teilumfang umschlingt. Außerdem ist der Zugriemen zwischen dem Umschlingungsbereich am Rotorblatt und mindestens einer Antriebswelle oder -scheibe in Form eines Flaschenzugs über mindestens eine Flaschenzugsrolle geführt.

Durch die Ausbildung eines solchen Flaschenzugs innerhalb des Riementriebs lassen sich sehr hohe, nämlich bei einer Flasche mit einer Rolle doppelte Zugkräfte mit dem Riemen übertragen, so dass steigende Drehmomente bei der Rotorblattverstellung kein Problem mehr darstellen. Die üblicherweise bei den Zahnriemen aus dem Stand der Technik kritischen Zahnfußspannungen/Zahnbelastungen spielen keine Rolle mehr. Auch die für Zahnriemen typische hohe Vorspannung ist nicht mehr so relevant für die Zugkraft, die für die Übertragung des Drehmoments nötig ist.

Durch die Wicklung der Riemen auf den Antriebswellen oder-Scheiben ist es möglich, sehr hohe Kräfte zu übertragen und als Zugkräfte in den Riemen einzuleiten.

Letztlich ist es bei der Übertragung des Drehmomentes auf den Schaft des Rotorblattes erfindungswesentlich, dass zwischen den Antriebswelle-oder Scheiben ein durchgängiges Trum des Zugmittels gebildet wird, welches über den Umschlingungsbogen die nötigen Kräfte übertragen kann. So kann man auf die bei Einzelzugriemen aus dem Stand der Technik üblicherweise nötigen Klemmungen zur mechanischen Verbindung mit dem Schaft grundsätzlich verzichten. Damit besteht auch nicht mehr die Gefahr, dass sich bei übergroßen Zugkräften im Zugmittel vorhandene Verstärkungselemente durch Scherkräften lösen oder von der vom Grundkörper trennen könnten. Durch das erfindungsgemäße Prinzip der endseitigen Wicklung und mittigen Umschlingung zwischen den Antrieben sowie durch die sich ergebenden relativ großen Umschlingungswinkel bei der erfindungsgemäßen Lösung ist es insbesondere auch möglich, auf rückenseitige Spannrollen zu verzichten, wodurch das Zugmittel nicht gegenläufigen Biegungen unterworfen wird, die die Lebensdauer oder die Belastbarkeit verringern könnten. Die Spannung, die durch die Wicklung auf den Antriebswellen erfolgt, ist völlig ausreichend.

Der Fuß bzw. Schaft des Rotorblattes kann hierzu in einem axialen Teilbereich besonders zur Aufnahme des durchgängigen nicht aufgewickelte Trums ausgebildet sein, beispielsweise durch eine entsprechenden Oberflächenausbildung oder -profilierung oder auch durch Führungsscheiben, Flansche oder Wellenabsätze.

Eine vorteilhafte Weiterbildung besteht darin, dass die Antriebe der Antriebswellen oder - scheiben abbremsbar sind. Durch wechselseitige und abwechselnde Wicklung des Zugriemens auf den Antriebswellen oder -scheiben ist damit eine genau definierte Stellung der Rotorblätter leicht anzufahren, da die Antriebe jeweils "gegen Bremse" durch den anderen Antrieb gefahren werden können und damit genau positionierbar sind. Eine solche abgebremste Fahrweise lässt natürlich Spannrollen überflüssig werden. Um das Rotorblatt gänzlich festzusetzen, gehen beide Motoren in Bremsposition.

Eine weitere vorteilhafte Ausbildung besteht darin, dass die mindestens eine Flaschenzugrolle am Fuß bzw. Schaft des Rotorblattes gelagert ist, also auf dem verstellbaren oder drehbaren Teil des Rotorblattes. Die Flaschenzugrolle und deren Lagerung "dreht mit" und bildet so eine sehr klein bauende Konstruktion, die einfach innerhalb der Nabe platziert werden kann. Natürlich kann können Flaschenzugrollen auch an feststehenden Teil der Nabe angebracht werden, etwa dann, wie dies in den Ausführungsbeispielen gezeigt wird, wenn ein Mehrfachflaschenzug bereitgestellt werden soll und die Anzahl der Konstruktionsteile auf den rotierenden Bauteilen vermindert werden soll.

Eine weitere vorteilhafte Ausbildung zur Verringerung der Baugröße bei nahezu gleich bleibender übertragbarer Kraft besteht darin, dass der Zugriemen als Flachriemen oder als mindestens einseitig profilierter Flachriemen ausgebildet ist, wobei der freie, nicht aufgewickelte Trum des Zugriemens den Fuß bzw. Schaft des Rotorblattes reibschlüssig umschlingt. Bei einer solchen Lösung entfallen auch umfangreiche Bearbeitungen von Antriebsscheiben oder Umschlingungsbereich durch etwaige Verzahnung und Profilierung. Unter einer üblichen Vorspannung und einem Umschlingungswinkel von in der Regel größer als 100° ergibt sich eine ausreichende Normal- und Reibkraft und somit ohne die Notwendigkeit zusätzlicher Spannrollen ein ausreichender Reibschluss, der für den Antrieb der meisten Rotorblattverstellungen völlig ausreicht.

Allerdings kann es je nach erforderlichem Dreh-oder Schwenkwinkel des Rotorblattes bei der erfindungsgemäßen Flaschenzug-Lösung passieren, dass die eine Flaschenzugsrolle umlaufenden und damit im Flaschenzug gegenläufigen Teile, also die in eine Rolle einlaufende und aus derselben Rolle oder einer andern Rolle auslaufende Teile des Zugriementrums, sich einander nähern und sich letztlich berühren, was natürlich zur Reibung und damit auch zu einem gewissen Verschleiß führen könnte.

Dies wird vermieden durch eine weitere vorteilhafte Ausbildung, bei der die eine Flaschenzugsrolle umlaufenden im Flaschenzug gegenläufigen Teile des Zugriementrums durch Abstandshalter getrennt werden, vorzugweise durch Gleitschienen oder Rollen, an denen die gegenüber liegenden Seiten des des Zugriementrums gegenläufig bewegbar gleitend oder abrollend anliegen.

Ebenfalls in diesem Sinne wirkt eine weitere vorteilhafte Ausbildung, bei der der Zugriemen mindestens einseitig mit einer gleitfähigen Auflage versehen ist, vorzugsweise natürlich an der Seite, an der zwei Bereiche bzw. Teile des Zugriementrums sich einander nähern könnten oder aneinander anliegenden. Verbessert wird die Wirkung dadurch, dass der Zugriemen einseitig eine Gewebelage als gleitfähige Auflage aufweist, vorzugsweise eine mit einer Polyethylenfolie beschichtete Gewebelage. Natürlich ist eine solche Beschichtung nicht nur in den Fällen günstiger, in denen die Flaschenzugrollen am Rotorblattschaft gelagert sind, sondern auch in den Fällen, in denen die Flaschenzugrollen am feststehenden Teil der Nabe befestigt sind.

In besonderen Fällen und als zusätzliche Sicherheit besteht eine weitere vorteilhafte Ausbildung darin, dass der nicht aufgewickelte Trum des Zugriemens vorzugsweise in seinem mittleren Bereich der Umschlingung am Fuß bzw. Schaft des Rotorblattes zusätzlich form- und/oder reibschlüssig befestigt ist. Dies kann z. B. durch eine Klemmung geschehen oder auch durch einen Mitnehmer. Mit einer solchen Befestigung lässt sich auch evtl. auftretender Schlupf der Zugriemen sicher vermeiden. Eine solche Befestigung kann, wie dies auch in den Ausführungsbeispielen dargestellt ist, aber auch am feststehenden und nicht drehbaren Teil der Nabe erfolgen. Der Grund für eine solche Lösung ist dann nicht eine zusätzliche Sicherheit gegen Durchrutschen, sondern eine konstruktive Vereinfachung bzw. konstruktive Maßnahmen zur Verringerung des Bauraumes, den man für die bewegten Teile braucht.

Bei der erfindungsgemäßen Einrichtung kommt es natürlich besonders auch auf das Zugmittel an, was in besonderer Weise zur Verwendung in diesem Riementrieb zur Rotorblattverstellung angepasst werden muss. Insofern ist es vorteilhaft, wenn der Zugriemen aus im Wesentlichen aus einem elastomeren Material, vorzugsweise aus Polyurethan ausgebildet ist und als Zugträger Corde aufweist, deren Corddurchmesser b im Verhältnis zum Kerndurchmesser D der kleinsten im Zugriementrieb vorhandenen Umlenkrolle, Antriebswelle oder -scheibe der Ungleichung D ≥ 40 b genügt. Das gilt auch für die Umschlingung der Abstandsrollen oder weiterer Stützrollen.

Als Kerndurchmesser einer Antriebswelle oder -scheibe wird hier der Durchmesser bezeichnet, der die erste Wicklung des Zugmittels/Zugriemens aufnimmt, also der Aussendurchmessser des Wellengrundes der Welle bzw. des Scheibengrundes einer Scheibe, ohne Berücksichtigung etwaiger Führungs- oder Bordscheiben. Sinngemäß gilt dasselbe für eine Umlenkrolle, natürlich ohne dass hier eine Wicklung erfolgt. Unter Berücksichtigung der oben genannten Ungleichung ergibt sich für den Zugriemen auch bei hoher Belastung bzw. einem hohen Lastkollektiv eine ausreichend hohe Lebensdauer, so dass diesbezüglich lange Wartungsintervalle möglich sind.

Diese Maßgabe gilt für die Antriebsscheibe bzw. -welle natürlich auch dann, wenn deren Mindestdurchmesser / Kerndurchmesser zwar etwas kleiner ausgebildet ist, aber immer eine oder einige Windungen des Zugmittels permanent auf der Scheibe aufgelegt bleiben und nicht mehr abgewickelt werden. Diese untersten Windungen oder Wicklungen sind sozusagen als Grundwindungen immer vorhanden und vergrößern den im Betrieb wirksamen Kerndurchmesser D.

Die Zugträger sollten dabei möglichst als Corde aus Stahl und als Litzenkonstruktion ausgebildet sein und die Zwischenräume der Litzenkonstruktion zu mindestens 60%, vorzugsweise zu mindestens 80% mit elastomerem Material ausgefüllt sein.

Eine weitere vorteilhafte Ausbildung besteht darin, dass Rotorachse und die Achsen der Antriebswellen oder -scheiben, auf die der Zugriemen wechselseitig und abwechselnd aufwickelbar ist, im Wesentlichen parallel sind. Dadurch ist im Riementrieb kein Verdrehen, das heißt kein Twist des Zugriemens erforderlich und der Bauraum wird weitere deutlich reduziert.

Anhand eines Ausführungsbeispiels soll die Erfindung näher erläutert werden. Es zeigen
- Fig. 1: prinzipiell eine Windkraftanlage mit verstellbaren Rotoren
- Fig. 2: die erfindungsgemäße Einrichtung zur Rotorblattverstellung einer Windkraftanlage als Prinzipskizze
- Fig. 3: eine weitere Ausführung einer erfindungsgemäßen Einrichtung zur Rotorblattverstellung
- Fig. 4: eine andere, weitere Ausführung einer erfindungsgemäßen Einrichtung zur Rotorblattverstellung
- Fig. 5: eine Einrichtung zur Rotorblattverstellung aus dem Stand der Technik als Prinzipskizze
- Fig. 6: eine weitere Einrichtung zur Rotorblattverstellung
- Fig. 7: eine weitere Einrichtung zur Rotorblattverstellung

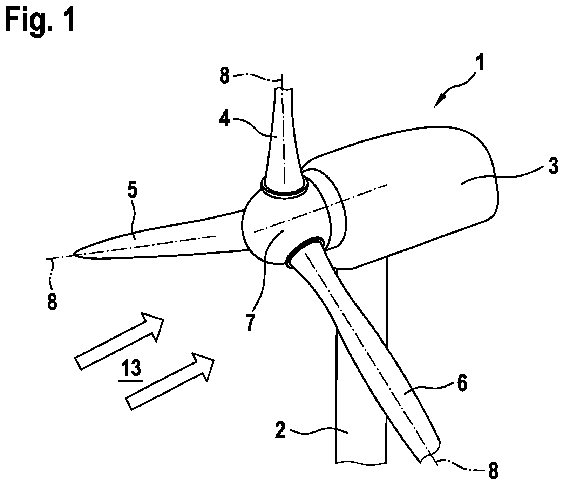

Fig. 1 zeigt prinzipiell eine Windkraftanlage 1 mit einem auf einem Turm 2 befestigten Generatorgehäuse 3. Die Windkraftanlage weist einen dreiblättrigen Rotor auf mit den Blättern 4, 5 und 6, die in der Nabe 7 gelagert und alle in ihrer Anstellung zum anströmenden Wind 13 verstellbar sind, d.h. um ihre Längsachsen 8 drehbar ausgebildet und dadurch mit einer Rotorblattverstellung ausgerüstet sind.

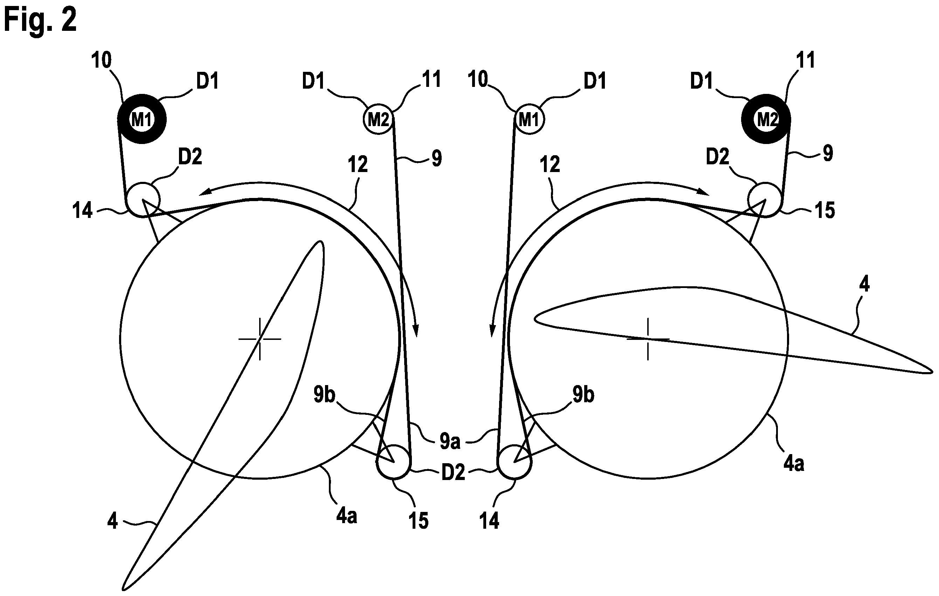

Fig, 2 zeigt als Prinzipskizze die erfindungsgemäße Einrichtung zur Rotorblattverstellung beispielsweise am Rotorblatt 4 dieser Windkraftanlage in Richtung der Blattlängsachse 8 gesehen, wobei das Rotorblatt 4 im linken und rechten Teil der Fig. 2 in zwei verschiedenen Stellungen dargestellt ist. Die Verstellung des drehbar gelagerten Rotorblattes 4 erfolgt über einen Zugriementrieb, bei dem ein Zugriemen 9 den Fuß bzw. Schaft des Rotorblattes 4a auf einem Teilumfang so umschlingt, dass ein zur Verstellung des Rotorblattes erforderliches Drehmoment auf den Schaft übertragbar ist.

Der Zugriemen ist hier als Flachriemen ausgebildet und an seinen beiden Enden mit an je einer mit einem Antriebsmotor M1 bzw. M2 versehenen Antriebswelle 10 bzw. 11 mit den Kerndurchmessern D1 befestigt und auf letzteren wechselseitig und abwechselnd aufwickelbar.

In der Figur 2 erkennt man, dass auf der linken Seite bei der dort gezeigten Stellung des Rotorblattes 4 der Flachriemen 9 mithilfe des Antriebsmotors M1 auf der Antriebswelle 10 aufgewickelt ist und von der Antriebswelle 11, die mit dem Motor M2 verbunden ist, abgewickelt ist. Im Gegensatz dazu ist auf der rechten Seite der Figur 2 gezeigt, dass bei der dort veränderten Stellung des Rotorblattes 4 der Flachriemen 9 mithilfe des Antriebsmotors 2 auf der Antriebswelle 11 aufgewickelt ist und von der Antriebswelle 10 abgewickelt ist.

Der Zugriemen/Flachriemen 9 bildet einen zwischen den Antriebswellen oder -scheiben befindlichen durchgängigen Trum aus, der nicht aufgewickelt ist, sondern zur Umschlingung des und zur Kraftübertragung bzw. Momentenübertragung auf den Schaft des Rotorblattes vorgesehen ist. Dieser zwischen den Befestigungen auf den Antriebsscheiben bzw. Wellen durchgängige Trum umschlingt den Fuß bzw. Schaft des Rotorblattes 4a reibschlüssig über den Teilumfang 12. Es handelt sich hier also nur um einen einzigen längeren ununterbrochenen Zugriemen, der zum Antrieb des Schaftes / des Rotorblatts genutzt wird.

Der Trum umschlingt jedoch nicht nur den genannten Teilumfang sondern ist selbst auch Teil eines Flaschenzugs. Dazu ist der Zugriementrum der zwischen dem Umschlingungsbereich, d.h. dem wandernden Teilumfang 12 und mindestens einer Antriebswelle oder -scheibe (10, 11) in Form eines Flaschenzugs über mindestens eine Flaschenzugsrolle 14 und 15 mit dem jeweiligen Kerndurchmesser D2 geführt. Die Flaschenzugsrollen 14 und 15 sind hier am Fuß bzw. Schaft des Rotorblattes 4a gelagert und so mit dem Rotorblatt bewegt bzw. gedreht. Natürlich können die Umlenkrollen auch im feststehenden Teil der Nabe angeordnet.

Die erfindungsgemäße in der Figur 2 gezeigte Konstruktion einer Rotorblattverstelleinrichtung mit ihrer Anordnung der Motoren bzw. Antriebswellen- und -scheiben 10 und 11 relativ zum Rotorschaft 4a ist so ausgelegt, dass die eine Flaschenzugrolle 14, 15 umlaufenden und im Flaschenzug gegenläufigen Teile 9a und 9b des Zugriementrums nicht aneinander anliegen und sich nicht berühren können.

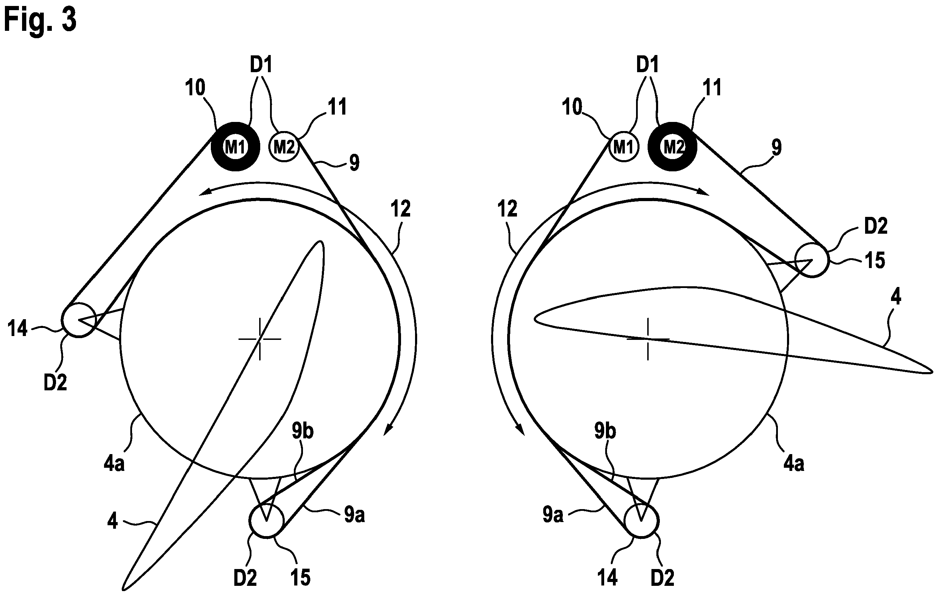

Anders ist das bei der in der Figur 3 gezeigten Konstruktion einer erfindungsgemäßen Einrichtung zur Rotorblattverstellung. Hier ist durch die Lage der Motoren bzw. Antriebswellen-oder Scheiben 10 und 11 relativ zum Schaft des Rotorblattes 4a eine Situation gegeben, in der die eine Flaschenzugrolle 14, 15 umlaufenden und im Flaschenzug gegenläufigen Teile 9a und 9b des Zugriementrums aneinander über fast den gesamten Umschlingungsbereich 12 anliegen und sich dort berühren. Hier ist deswegen der Zugriemen 9 einseitig mit einer eine Gewebelage als gleitfähige Auflage versehen, die zusätzlich noch mit einer Polyethylenfolie beschichtetet ist. Dadurch wird eine zu hohe Erwärmung der aneinander liegenden Teile der Trums durch Reibung vermieden, was bei den hier nur geringen Dreh- oder Verstellgeschwindigkeiten des Rotorschaftes 4a völlig ausreichend ist.

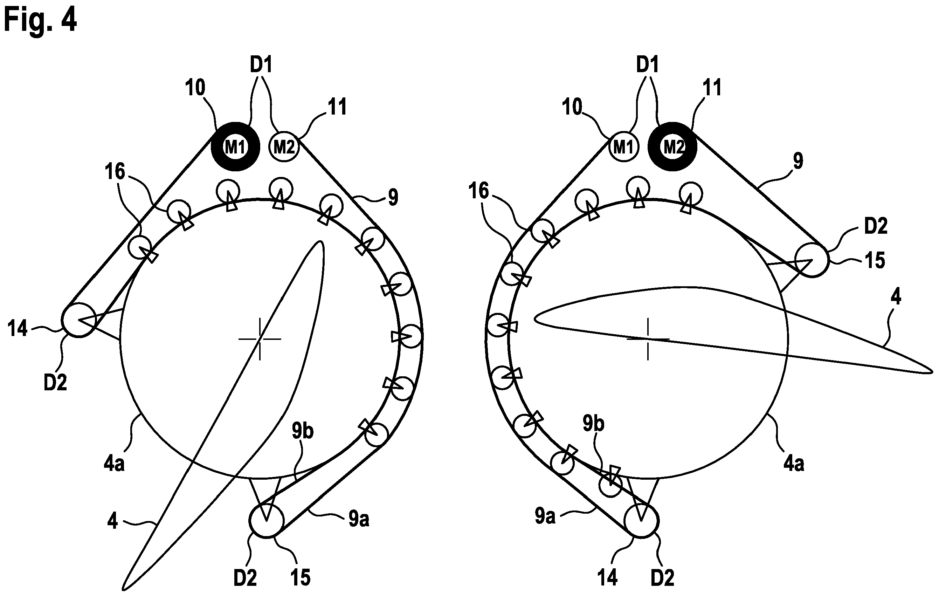

Fig. 4 zeigt eine erfindungsgemäße Ausführung, bei der die eine Flaschenzugsrolle umlaufenden und im Flaschenzug gegenläufigen Teile 9a, 9b des Zugriemens 9 durch Abstandshalter getrennt werden. Dies geschieht hier durch eine Anzahl von auf dem Rotorschaft gelagerten Abstandsrollen 16, die eine Rollenführung bilden und an denen die gegenläufigen Teile 9a und 9b abrollen und somit gegenläufig bewegbar anliegen. In der Figur 3 sind der besseren Übersicht halber nicht alle Bezugsziffern enthalten, sondern nur diejenigen, die zur Erklärung der Funktion notwendig sind. Die übrigen Teile entsprechen denen in der Fig. 2.

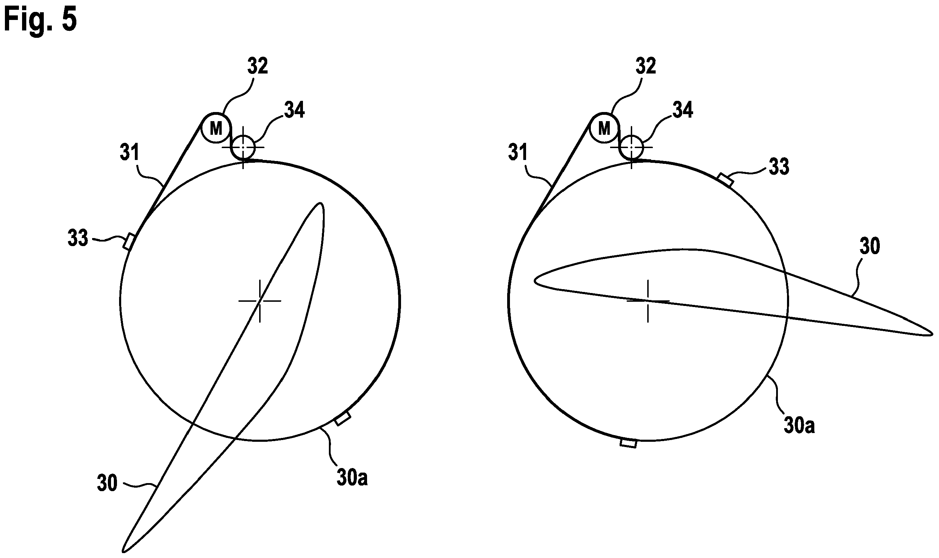

Zum Vergleich zeigt Fig. 5 prinzipiell eine herkömmliche Rotorblattverstellung aus dem Stand der Technik. Die Verstellung des drehbar gelagerten Rotorblattes 30 erfolgt dort durch einen Zahnriementrieb, bei dem ein Zahnriemen 31 einerseits in eine mit einem Motor M verbundene Antriebsscheibe 32 kämmend eingreift und andererseits in einen am Schaft 30a des Rotorblattes 30 angreift, üblicherweise an einer hier nicht im Detail dargestellten verzahnten Spannplatte. Die Antriebsscheibe ist mit einer zum Zahnriemen komplementären Verzahnung versehen. Der Zahnriemen umschlingt die Antriebsscheibe um einen Teil des jeweiligen Außenumfangs und ist an seinen Enden mit jeweils einer Klemmung 33 auf dem Rotorschaft befestigt. Die Zugkräfte und das übertragbare Drehmoment einer solchen Verstelleinrichtung mit Zahnriemen sind begrenzt und wesentlich niedriger als die bei der erfindungsgemäßen Ausbildung übertragbaren Kräfte. Der Zahnriemen 31 umläuft mit seinem Rücken auch eine als Rückenrolle ausgebildete Umlenkrolle 34, die gleichzeitig als Spannrolle dient. Somit bilden hier Zahnriemen 31, Antriebsscheibe 32, Umlenkrolle 34 und der Schaft mit Spannplatte diesen Zahnriementrieb aus dem Stand der Technik, mit dem das Rotorblatt um seine Längsachse gedreht/verstellt wird.

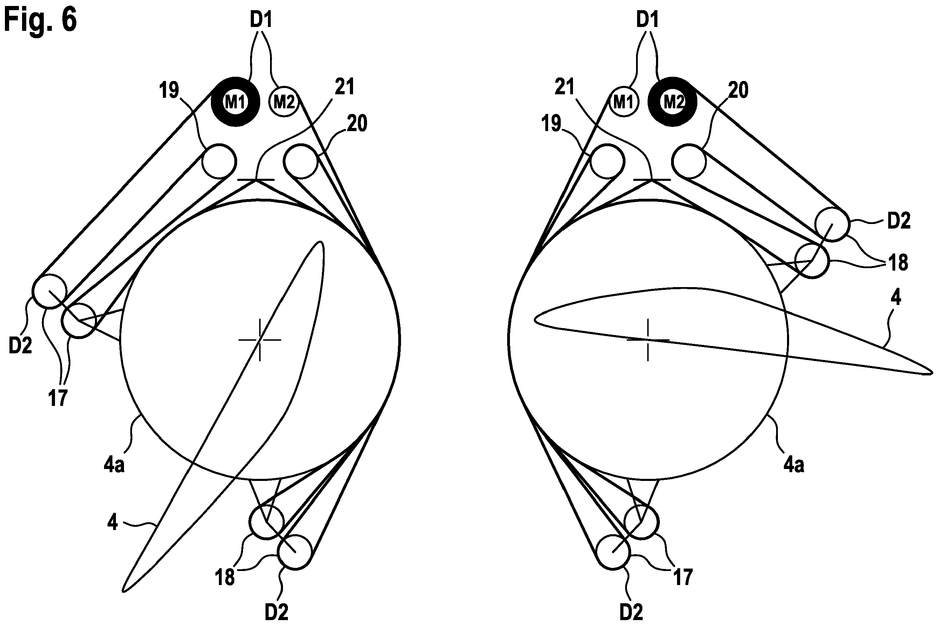

Fig. 6 zeigt prinzipiell eine weitere Ausführung der erfindungsgemäßen Einrichtung zur Rotorblattverstellung, bei der der Rotorschaft 4a des Rotorblattes 4 mithilfe eines Mehrfach-Flaschenzugs gedreht und damit das Rotorblatt verstellt werden kann. Deutlich erkennbar sind hier die jeweils doppelt ausgebildeten Flaschenzugrollen 17 und 18, die am Rotorschaft befestigt sind, sowie die weiteren, hier an feststehenden, nicht drehbaren oder verstellbaren Teilen der Nabe oder des Gehäuses vorgesehenen Flaschenzugrollen 19 und 20. Auch die Befestigung 21 des Zugriemens ist hier an der nicht drehbaren Nabe oder am Gehäuse ausgebildet.

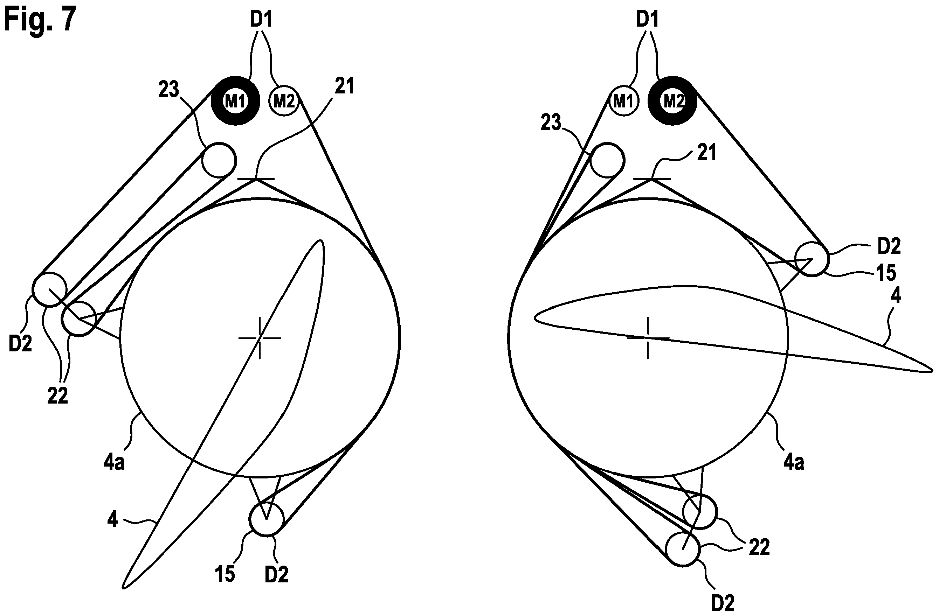

Fig. 7 zeigt noch eine andere Version der erfindungsgemäßen Einrichtung zur Rotorblattverstellung, bei der die Verstellung zwar auch wie bei der in Figur 6 gezeigten Ausführung mithilfe eines Mehrfach-Flaschenzugs erfolgt, allerdings einem asymmetrischen Mehrfachflaschenzug, bei der der Mehrfach-Flaschenzug mit den doppelt und am Rotorschaft ausgebildeten Flaschenzugrollen 22 auf der stärker belasteten Seite der Drehbewegung angeordnet ist. Auch hier weist der Mehrfach-Flaschenzug eine an feststehenden Teilen der Nabe oder des Gehäuses weitere Flaschenzugrolle 23 auf. Ebenso ist auch hier die Befestigung 21 des Zugriemens an der nicht drehbaren Nabe bzw. am Gehäuse ausgebildet.

### Bezugszeichenliste

### (Teil der Beschreibung)

- 1: Windkraftanlage
- 2: Turm der Windkraftanlage
- 3: Generatorgehäuse
- 4: Verstellbares Rotorblatt
- 4a: Schaft des Rotorblattes
- 5: Verstellbares Rotorblatt
- 6: Verstellbares Rotorblatt
- 7: Nabe
- 8: Rotorblattlängsachse
- 9: Zugriemen
- 9a, 9b: Teil des Zugriementrums
- 10: Antriebswelle / Antriebsscheibe
- 11: Antriebswelle / Antriebsscheibe
- 12: Teilumfang
- 13: Wind, Windrichtung
- 14: Flaschenzugrolle
- 15: Flaschenzugrolle
- 16: Abstandshalter/Abstandsrolle
- 17: Flaschenzugrolle, doppelt ausgebildet
- 18: Flaschenzugrolle, doppelt ausgebildet
- 19: Flaschenzugrolle, feststehend
- 20: Flaschenzugrolle, feststehend
- 21: Befestigung
- 22: Flaschenzugrolle, doppelt ausgebildet
- 23: Flaschenzugrolle, feststehend

- 30: Rotorblatt
- 30a: Schaft des Rotorblattes
- 31: Zahnriemen
- 32: Antriebsscheibe
- 33: Klemmung
- 34: Rückenrolle / Umlenkrolle

## Patentansprüche

1. Einrichtung zur Rotorblattverstellung an einer Windkraftanlage (1), bei der die Verstellung eines drehbar gelagerten Rotorblattes (4, 5, 6) über einen Zugriementrieb erfolgt, bei dem ein Zugriemen (9) den Fuß bzw. Schaft des Rotorblattes (4a) mindestens teilweise so umschlingt, dass ein zur Verstellung des Rotorblattes erforderliches Drehmoment auf den Schaft übertragbar ist, **dadurch gekennzeichnet, dass** der Zugriemen (9) an seinen beiden Enden mit je einer mit einem Antriebsmotor versehenen Antriebswelle oder -scheibe (10, 11) verbunden und auf letzteren wechselseitig und abwechselnd aufwickelbar ist, wobei der Zugriemen (9) einen zwischen den Antriebswellen oder -scheiben befindlichen, nicht aufgewickelten durchgängigen Trum ausbildet, der den Fuß bzw. Schaft des Rotorblattes über einen Teilumfang (12) umschlingt und der zwischen dem Umschlingungsbereich und mindestens einer Antriebswelle oder -scheibe (10, 11) in Form eines Flaschenzugs über mindestens eine Flaschenzugsrolle (14, 15) geführt ist.

2. Einrichtung nach Anspruch 1, bei der die Flaschenzugsrolle (14, 15) am Fuß bzw. Schaft des Rotorblattes (4a) gelagert ist.

3. Einrichtung nach Anspruch 1 oder 2, bei der der Zugriemen als Flachriemen oder als mindestens einseitig profilierter Flachriemen ausgebildet ist, wobei der freie, nicht aufgewickelte Trum des Zugriemens (9) den Fuß bzw. Schaft (4a) des Rotorblattes reibschlüssig umschlingt.

4. Einrichtung nach einem der Ansprüche 1 bis 3, bei der die eine Flaschenzugsrolle (14, 15) umlaufenden im Flaschenzug gegenläufigen Teile (9a, 9b) des Zugriementrums durch Abstandshalter (16) getrennt werden, vorzugweise durch Gleitschienen oder Rollen, an denen die gegenüber liegenden Seiten (9a, 9b) des des Zugriementrums gegenläufig bewegbar anliegen.

5. Einrichtung nach einem der Ansprüche 1 bis 4, bei der der Zugriemen mindestens einseitig mit einer gleitfähigen Auflage versehen ist.

6. Einrichtung nach Anspruch 5, bei der der Zugriemen einseitig eine Gewebelage (18) als gleitfähige Auflage aufweist, vorzugsweise eine mit einer Polyethylenfolie beschichtete Gewebelage.

7. Einrichtung nach einem der Ansprüche 1 bis 6, bei der der nicht aufgewickelte Trum des Zugriemens (9) vorzugsweise in seinem mittleren Bereich der Umschlingung am Fuß bzw. Schaft des Rotorblattes form- und/oder reibschlüssig befestigt ist.

8. Einrichtung nach einem der Ansprüche 1 bis 7, bei der Rotorachse und die Achsen der Antriebswellen oder -scheiben, auf die der Zugriemen wechselseitig und abwechselnd aufwickelbar ist, im Wesentlichen parallel sind.

9. Einrichtung nach einem der Ansprüche 1 bis 8, bei der die Antriebe der Antriebswellen oder -scheiben abbremsbar sind.

## Claims

1. Arrangement for rotor blade adjustment on a wind turbine (1), in which the adjustment of a rotatably mounted rotor blade (4, 5, 6) is carried out via a belt drive, in which a belt (9) wraps at least partly around the foot or shaft of the rotor blade (4a) such that a torque required to adjust the rotor blade can be transmitted to the shaft, **characterized in that** the belt (9) is connected at each of its two ends to a drive shaft or pulley (10, 11) provided with a drive motor and can be wound on the said drive shaft or pulley alternately and reciprocally, wherein the belt (9) forms a continuous run located between the drive shafts or pulleys that is not wound up, which wraps around the foot or shaft of the rotor blade over a partial circumference (12) and which, between the wrap region and at least one drive shaft or pulley (10, 11), is guided in the form of a block and tackle over at least one block-and-tackle pulley (14, 15).

2. Arrangement according to Claim 1, in which the block-and-tackle pulley (14, 15) is mounted on the foot or shaft of the rotor blade (4a).

3. Arrangement according to Claim 1 or 2, in which the belt is formed as a flat belt or as a flat belt profiled on at least one side, wherein the free, unwound run of the belt (9) wraps frictionally around the foot or shaft (4a) of the rotor blade.

4. Arrangement according to one of Claims 1 to 3, in which the parts (9a, 9b) of the belt run that run around a block-and-tackle pulley (14, 15) in opposite directions in the block and tackle are separated by spacers (16), preferably by sliding rails or rollers, on which the mutually opposite sides (9a, 9b) of the belt run rest such that they can move in opposite directions.

5. Arrangement according to one of Claims 1 to 4, in which the belt is provided on at least one side with a slidable support.

6. Arrangement according to Claim 5, in which the belt has on one side a fabric layer (18) as a slidable support, preferably a fabric layer coated with a polyethylene film.

7. Arrangement according to one of Claims 1 to 6, in which the unwound run of the belt (9) is fixed to the foot or shaft of the rotor blade in a form-fitting and/or frictionally fitting manner, preferably in its central region of the wrap.

8. Arrangement according to one of Claims 1 to 7, in which the rotor axis and the axis of the drive shafts or pulleys on which the belt is wound up alternately and reciprocally are substantially parallel.

9. Arrangement according to one of Claims 1 to 8, in which the drives of the drive shafts or pulleys can be braked.

## Revendications

1. Dispositif de réglage de pale de rotor sur une éolienne (1), le réglage d'une pale de rotor (4, 5, 6) montée à rotation étant effectué par le biais d'une commande par courroie de traction, une courroie de traction (9) enlaçant au moins partiellement le pied ou la tige de la pale de rotor (4a) de manière à pouvoir transférer à la tige un couple nécessaire au réglage de la pale du rotor, **caractérisé en ce que** la courroie de traction (9) est reliée, à chacune de ses deux extrémités, à un arbre ou une poulie d'entraînement (10, 11) muni chacun d'un moteur d'entraînement et peut s'enrouler alternativement et en alternance sur cette dernière, la courroie de traction (9) formant un brin continu non enroulé située entre les arbres ou poulies d'entraînement, lequel brin enlaçant le pied ou la tige de la pale de rotor sur une partie (12) de la circonférence et est guidé entre la zone d'enlacement et au moins un arbre ou une poulie d'entraînement (10, 11) sous la forme d'un moufle par le biais d'au moins un rouleau de moufle (14, 15).

2. Dispositif selon la revendication 1, le rouleau de moufle (14, 15) étant monté sur le pied ou la tige de la pale de rotor (4a).

3. Dispositif selon la revendication 1 ou 2, la courroie de traction étant conçue comme une courroie plate ou une courroie plate au moins profilée sur un côté, le brin déroulé non enroulé de la courroie de traction (9) enlaçant le pied ou la tige (4a) de la pale de rotor par friction.

4. Dispositif selon l'une des revendications l à 3, les parties (9a, 9b) du brin de courroie de traction, lesquelles sont de sens opposés dans le moufle et courent autour du rouleau de moufle (14, 15), sont séparées par des entretoises (16), de préférence par des glissières ou des rouleaux, sur lesquels les côtés opposés (9a, 9b) du brin de courroie de traction viennent en appui de manière mobile dans des sens opposés.

5. Dispositif selon l'une des revendications 1 à 4, la courroie de traction étant munie d'un appui coulissant sur au moins un côté.

6. Dispositif selon la revendication 5, la courroie de traction comportant sur un côté une couche de tissu (18) servant d'appui coulissant, de préférence une couche de tissu revêtue d'un film de polyéthylène.

7. Dispositif selon l'une des revendications 1 à 6, le brin non enroulé de la courroie de traction (9) étant fixé par complémentarité de formes et/ou par friction au pied ou à la tige de la pale de rotor de préférence dans sa zone centrale de l'enroulement.

8. Dispositif selon l'une des revendications 1 à 7, l'axe du rotor et les axes des arbres ou poulies d'entraînement, sur lesquels la courroie de traction peut être enroulée alternativement et en alternance, sont sensiblement parallèles.

9. Dispositif selon l'une des revendications 1 à 8, les entraînements des arbres ou poulies d'entraînement peuvent être freinés.
